# EUROPEAN PATENT SPECIFICATION

(11) **EP 4 157 786 B1**
(45) Date of publication and mention of the grant of the patent: **08.01.2025**
(21) Application number: 21734218.7
(22) Date of filing: 31.05.2021
(51) Int. Cl.: B67D 1/08, A47J 31/40, A47J 31/52, B67D 1/00, B67D 3/00

(54) **DISPENSER FOR THE DELIVERY OF FOODSTUFFS AND RELATED DELIVERY METHOD**
SPENDER ZUR AUSGABE VON LEBENSMITTELN UND ZUGEHÖRIGES AUSGABEVERFAHREN
DISTRIBUTEUR POUR L'ADMINISTRATION DE PRODUITS ALIMENTAIRES ET PROCÉDÉ DE DISTRIBUTION ASSOCIÉ

(30) Priority: 29.05.2020 IT 202000012880
(43) Date of publication of application: 05.04.2023
(73) Proprietor: General Beverage S.r.l., 20122 Milano (IT)
(72) Inventor: VAROLI, Giovan Battista, 20122 Milano (IT); VAROLI, Cesare, 20122 Milano (IT)
(74) Representative: Brunacci, Marco
(86) International application number: PCT/IB2021/054767
(87) International publication number: WO 2021/240483

(56) References cited:
- EP-A2- 1 783 705
- US-A1- 2016 068 383
- US-B2- 9 198 458

## Description

### Technical Field

The present invention relates to a dispenser for the delivery of foodstuffs, in particular to an automatic or semi-automatic dispenser wherein the selection is made without any contact by the user interacting with the dispenser.

### Background Art

The use of contactless technology for the delivery of products in general has long been known. An example of a dispenser for the delivery of foodstuffs comprising a plurality of contactless acquisition elements is known from US 2016/068383 A1.

In the field of hygienic appliances, for example, there are many solutions in which the water supply from the taps is activated by means of an optical sensor connected to an electronic circuit that controls the opening/closing of a solenoid valve as a result of the recognition of the presence of a user's hand. The activation of the solenoid valve makes it possible to adjust the quantity of water to avoid, for example, waste or damage due to the continuous movement of the mechanical parts.

Similar solutions have also been implemented, for example, for the automatic delivery of soaps, again through the automatic recognition of the presence of the user's hand.

The control electronics in the known solutions is relatively easy to implement with the possibility of using optical components, also inexpensive, as it is not necessary to have high sensitivity of recognition; it is sufficient, in fact, to capture a minimal change in the light intensity to activate the delivery, usually by placing the back of the hand in front of the optical sensor.

The need to avoid the contact with the activating surfaces, such as displays or the like, is becoming more and more felt also in all the public places intended for the installation of food or beverage dispensers when shared by many users. Generally, the selection of a product is carried out by means of a classic pushbutton panel that must be pressed with a finger by a user, most of the times previously touched several times by other users.

At the time of the present disclosure, strict regulations have been introduced on the use of dispensers that require thorough sanitization and disinfection following the rapid spread of the Covid-19 pandemic. In the perception of users, however, these regulations are almost useless due to the fear of potential contamination regardless of sanitization. As a result, the use and consumption of the products is severely affected, with economic consequences for both manufacturers and operators.

The Applicant, already active in the production of dispensers for the delivery of food and beverages, has devised a solution that would allow users to continue to interact with the dispensers in absolute safety and without necessarily having to touch any part of the dispenser for the selection and delivery of the product.

The Applicant realized, however, that the simple automated recognition and delivery solutions used in the prior art are ill-suited in contexts where users interact with appliances capable of dispensing several products. Generally, in fact, a dispenser may deliver dozens of products with different possibilities for the ingredients selection and combination.

In particular, the invention to which the present application relates, is aimed at reducing the risk of contact with dispensers for the delivery of both hot and cold food products such as, e.g., traditional beverages such as espresso coffee, milk, infusions, water and/or combinations thereof, and/or gelled or thickened food products specifically intended for dysphagic users with swallowing problems.

The dispensers to which the present invention relates, address for example, both to the market of collective and tourist catering, where a large number of different users daily take, according to common self-service practices, drinks for breakfast in canteens, hotels, tourist villages, etc., and in the health and socio-medical field.

In fact, it should be emphasized that in the case of installations of dispensers in the wards of hospitals or hospitalization facilities, the need to limit as much as possible the contact of nursing staff with any product intended to be consumed by the patients and with the buttons of the dispensers themselves is even stronger.

In the wards where the semi-automatic dispensers are installed, beverages and food are in fact supplied directly by the staff for all patients (hot drinks for breakfast and snacks) and in particular for patients with fragile diets (gelled drinks, milk and homogenized cookies, nutritional supplementation).

Moreover, in hospitals, rehabilitation centers, nursing homes and retirement homes, the need to reduce the risk of contact by the kitchen staff with the homogenized preparations intended for guests and dysphagic patients made with some of the machines of the present invention is of particular relevance.

### Description of the Invention

By virtue of the requirements listed above, the Applicant has devised a dispenser for foodstuffs provided with contactless acquisition elements arranged according to well-defined positions so as not to be reached by any splashes during the delivery of the food product and, at the same time, able to activate the selection of a product safely and in an extremely simplified and intuitive manner both in the case of interaction by adults, children and/or people with disabilities (dispensers for catering and tourism), by health staff (hospital wards and health and socio-medical facilities in general) and by kitchen staff (kitchens of health and socio-medical institutions).

Thus, one object of the present invention relates to a dispenser for the delivery of foodstuffs according to claim 1.

Another object of the present invention relates to a method for the delivery of foodstuffs according to claim 10.

### Brief Description of the Drawings

Further characteristics and advantages of the dispenser and of the method for the delivery of foodstuffs according to the present invention will result from the description below of the preferred examples thereof, given by way of an indicative, yet non-limiting example, with reference to the attached figures, wherein:
- Figure 1 shows a front view of a dispenser for the delivery of foodstuffs according to the present invention,
- Figure 2 shows a perspective view of the dispenser in Figure 1,
- Figure 3 shows a front view of the dispenser in Figure 1 wherein the containers housed therein are visible,

- Figure 4 shows a schematic side view of the positioning of a finger of a user's hand in front of the contactless acquisition elements of the dispenser in Figure 1,
- Figure 5 shows a schematic side view of a user dispensing a food product from the dispenser in Figure 1.

### Embodiments of the Invention

With reference to the attached figures, reference numeral 1 globally indicates a dispenser for the delivery of foodstuffs according to the present invention.

In the remainder of the present description and in the subsequent claims, the term "dispenser for foodstuffs" means an appliance intended both for the delivery of traditional hot beverages such as, e.g., coffee, milk, infusions, water and/or combinations thereof, and intended for the delivery of gelled or thickened foodstuffs (hot or cold) specifically intended for dysphagic users with swallowing problems.

The dispenser 1 may be of the automatic or semi-automatic type. "Automatic" means an appliance capable of having several fully automated functions such as, e.g., the supply of holding receptacles for the products (such as, e.g., disposable glass, disposable cup, disposable plate), payment interface, etc. On the other hand, a "semi-automatic" dispenser is usually fitted in a self-service supply environment wherein the appliance does not provide for payment interfaces and does not supply the receptacle (the user receives the product with disposable and single-portion receptacles taken previously, with single-portion multi-use receptacles with which the dispenser is provided, or with other multi-portion containers such as jugs, carafes, gastro-norms). Different embodiments cannot however be ruled out wherein the dispenser 1 according to the invention may be of a combined type and comprise both automatic and semi-automatic functions.

Preferably, the dispenser 1 of the invention is of the semi-automatic type.

As illustrated, the dispenser 1 is provided with a frame 2 resting on a supporting surface of a trolley 3 and defining a volume adapted to house a plurality of *per se known* components, both internal and partly external, which are necessary for the operation thereof.

In detail, the dispenser 1 comprises a hydraulic circuit wherein a first inlet connectable to external water mains for the inlet of water and a second inlet connectable to one or more containers 4 of the concentrates for the preparation of foodstuffs are identified.

The components intended for the operation of the dispenser 1 may comprise, e.g., mixing means, water purification and filtering means, heating means (e.g., a boiler), a positive displacement pump, a solenoid valve, etc., connected in a fluid-operated manner to each other according to substantially known techniques. Preferably, each of such components is housed inside the frame 2.

An upper portion 5 is identified in the frame 2 for the storage, even partly externally, of the components required for the interface with the user and a lower portion 6.

The containers 4 may be housed inside the frame 2 or they can also be contained in compartments separate from the dispenser 1, e.g., inside the trolley 3, the latter being also provided with wheels to be easily moved. After the product inside the containers 4 has been exhausted, the latter are replaced with new containers or filled with new ingredients and connected again to the hydraulic circuit of the dispenser.

The containers 4 are of the drop-down type and comprise a hopper-shaped compartment for the storage of the food ingredients intended for the preparation of the foodstuff to be supplied, particularly in the form of powder, granules or liquid, and a lower opening 8 for the exit of the product. The containers 4 have an opening 4a arranged below for the exit of the food ingredients. The interior of the compartment of the container 4 comprises forward movement means for moving the food ingredients forward towards the lower opening 4a. Preferably, the forward movement means comprise an auger operated by the motorized means (not shown) to facilitate conveying the product towards the lower opening 4a.

Preferably, the containers 4 are intended to contain food ingredients of the soluble type, previously prepared, dehydrated, freeze-dried and/or homogenized.

The preparation of the foodstuff is preferably carried out by mixing the food ingredients contained in the containers 4 with water by means of mixing means, the latter comprising mixing bowls 9 in fluid connection with the container 4. Each opening 4a of the container 4 is then connected in a fluid-operated manner to the corresponding mixing bowl 9 which may be internally provided with a propeller to mix the food ingredients before their exit. The mixing bowl 9 is connected in a fluid-operated manner to the hydraulic circuit of the dispenser 1 to receive the water to be mixed with the ingredients exiting the containers 4.

Advantageously, the dispenser 1 is a compact appliance, with medium power consumption e.g. comprised between 1 kW and 6 kW, preferably about 3 kW.

The frame 2 has a height comprised between 300 and 1000 mm, preferably 830 mm, a width comprised between 250 and 750 mm, preferably 500 mm, and a depth comprised between 250 and 1000 mm, preferably 540 mm. In this way, it is possible to ensure simple and fast installations directly inside hospitals, nursing homes, catering centers, canteens, offices, amusement parks, tourist villages, gyms, naval catering, etc.

In the context of the present disclosure, the terms "upper", "lower", "vertical" and "horizontal" and/or the like, shall be understood to refer to the conditions of normal use of the dispenser, i.e., those in which it is used, in general, by a user for the delivery of one or more foodstuffs for consumption.

Between the upper portion 5 and the lower portion 6 of the frame 2, an intermediate delivery portion 7 comprising one or more delivery points 8 is identified for the delivery of the product to be introduced in the receptacle of the user.

Each delivery point 8 serves as a termination for multiple outlet tubes 10, each directly connected to a respective mixing bowl 9. Thus, in the dispenser 1, a plurality of delivery lines for the ingredients are identified which converge at a single delivery point 8 so that the mixing of several products in the receptacle of the user is possible. In fact, each delivery line is composed of at least one container 4, a bowl 9 and a tube 10.

In substance, the dispenser 1 of the invention is an appliance capable of delivering different products at the outlet of the delivery points 8 according to a plurality of configurations. For example, the food product exiting a delivery point 8 is a foodstuff mixed with water that may be:
- received from a single container 4 (and thus from a single delivery line) without being mixed with ingredients coming from other containers, or
- received from multiple containers 4 (and thus from multiple delivery lines) where mixing occurs downstream of the delivery point 8, in the user's receptacle.

Preferably, the foodstuff, after exiting the delivery point, is immediately consumable by a user (as opposed to the packaged products that are to be separated from the packaging that contains them).

Conveniently, the boiler (not shown) is configured to heat water which, as it mixes with ingredients, allows a foodstuff to be delivered at a preferred temperature comprised between 60 and 100 °C, preferably 70 to 130 °C.

The dispenser 1 has a single delivery point 8 or multiple delivery points 8 arranged side by side along a substantially horizontal direction X1, in use, and positioned above a collecting surface 11 for collecting any liquid residues.

Each delivery point 8 may receive at least one delivery line.

Preferably, each delivery point may receive a maximum number of delivery lines equal to the number of containers 4.

Conveniently, the delivery points 8 are horizontally separated from each other by a center to centre distance ranging from 30 mm to 100 mm, preferably 65 mm.

The end portion 10a of each tube 10 ends at the delivery point 8 and is oriented along its own substantially vertical direction Y1 in particular towards the collecting surface 11.

Conveniently, a seat 12 is formed between the delivery points 8 and the collecting surface 11 and is arranged to house the user's receptacle to be placed under a delivery point 8 to receive the desired foodstuff.

The frame 2 is enclosed by a plurality of removable panels, preferably made of steel. In detail, the dispenser 1 mainly comprises an upper front panel 2a, which can be opened and hinged on the frame 2 to form a door, and arranged at the point where the upper portion 5 is located, a lower front panel 2b arranged at the point where the seat 12 is located, two side panels 2c and a rear panel.

Preferably, the number of delivery points 8 may vary between a minimum of two to a maximum of six and even more for the purpose of being able to optimally mix in the receptacle the single ingredients deliverable from the various containers 4 and satisfy the different tastes of the users.

The dispenser 1 is provided with a plurality of contactless acquisition elements 13 which are configured to intercept the presence or absence of a finger of a user.

The acquisition elements 13 are preferably positioned at the point where the upper portion 5 of the frame 2 is located above the delivery point 8.

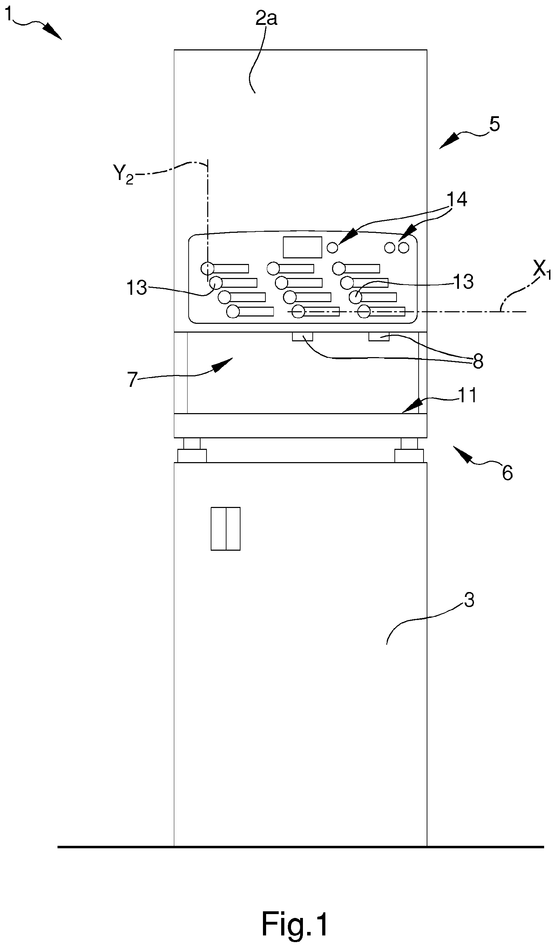

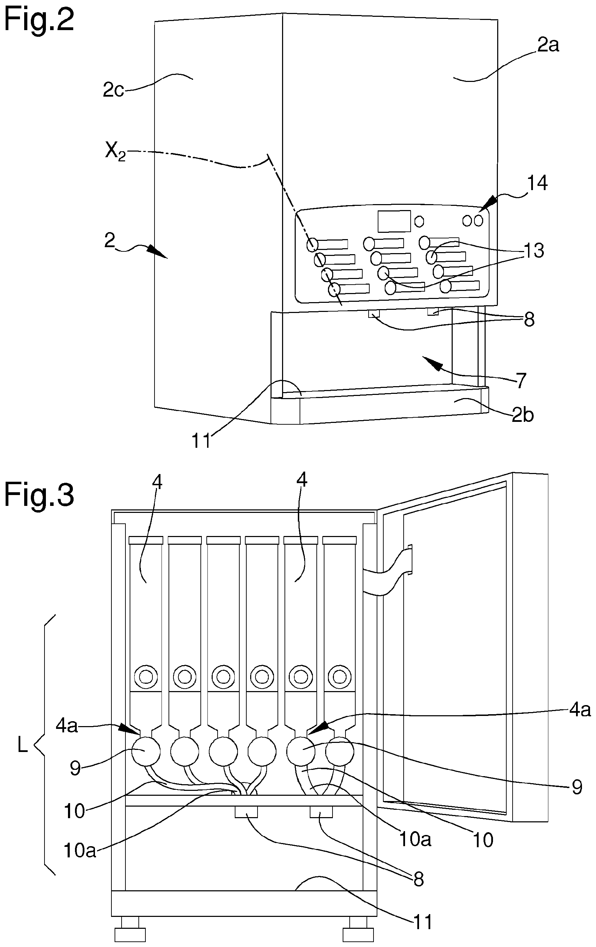

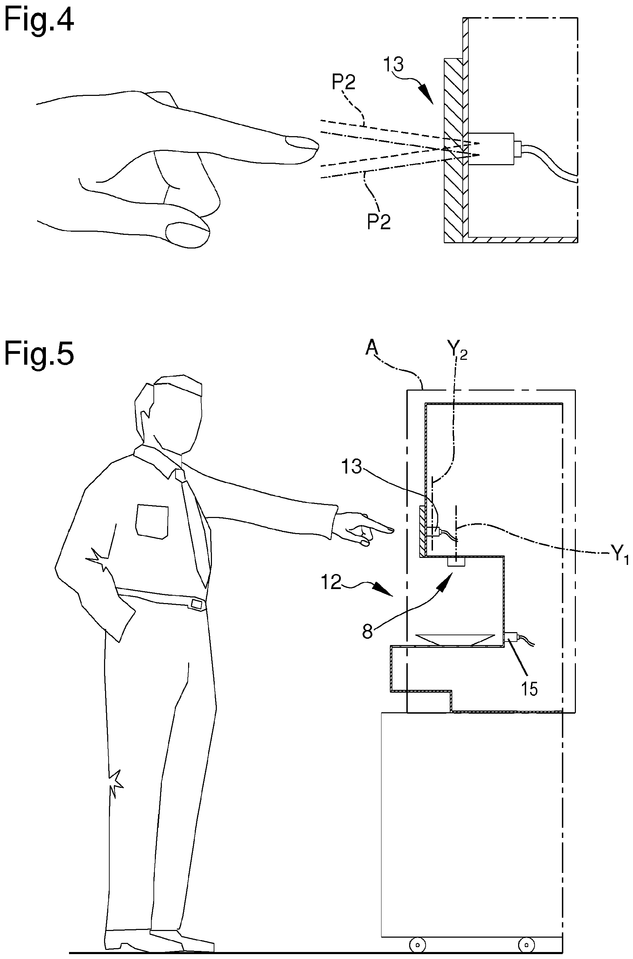

As observable in the examples of Figures 1, 2 and 5, each acquisition element 13 is mounted on the door 2a and is arranged along its own substantially vertical direction Y2 parallel to the direction Y1. In detail, the directions Y1 and Y2 of the delivery point 8 and of the acquisition element 13 respectively, are preferably contained in the same plane A extended transversely to the dispenser 1 in the direction of its width (Figure 5).

Conveniently, the acquisition elements 13 are vertically separated from each other by a center to center distance ranging from 20 mm to 80 mm, preferably 30 mm.

Conveniently, the acquisition elements 13 are horizontally separated from each other by a center to center distance ranging from 90 mm to 300 mm, preferably 140 mm.

As observable, the acquisition elements 13 are preferably located further forward than the delivery points 8 (with respect to the vantage point of a user placed frontally to the dispenser).

Advantageously, the acquisition elements 13 are greater in number than the delivery points 8. In the illustrated examples, the acquisition elements 13 are arranged in groups of three vertical rows arranged next to each other along a preferably oblique direction X2 contained in a plane parallel to the upper front panel 2a. Each row comprises four acquisition elements 13 in order to obtain the possibility of selecting twelve foodstuffs.

Each acquisition element 13 is positioned above each nozzle 6 at a distance from the latter preferably ranging from 40 to 180 mm.

Each acquisition element 13 is composed of an optical proximity sensor of the combined emission/receiving type which is configured to emit and receive a light radiation along substantially coincident optical emission/receiving paths P1, P2.

Conveniently, the emitter of the acquisition element 13 is configured to emit a preferably infrared light radiation while the receiver is configured to intercept the presence of an object in a predefined range comprised between 0 mm and 100 mm. In substance, the acquisition element 13 is operable by a finger of a user when positioned at a distance d₁ which is preset between 0 mm and 100 mm, preferably 35 mm with respect to the acquisition element 13 itself. This means that, in actual facts, the acquisition element 13 is operable both contactless (distance from the sensor > 0 mm) and with contact (distance from the sensor next to 0 mm).

The optical emission/receiving paths P1, P2 extend substantially perpendicularly with respect to said plane B, frontally to the dispenser 1. According to one version, the optical emission/receiving paths P1, P2 may also be oriented along an inclined downwards or upwards direction to facilitate the activation of the acquisition elements 13 also in the event of the part of the user's body to be intercepted (hand, finger, etc.) being not perfectly positioned frontally to the emitter, e.g. in the case of activations by either small or tall children or people.

For this purpose, steerable supporting means may be provided to support the emitter according to three-dimensional orientations.

Conveniently, the emitter and the receiver of each acquisition element 13 are mounted on a single support provided with at least two openings, spaced a few millimeters apart from each other, for the passage of the lighting and acquisition cones of the optical paths P1, P2, respectively. Preferably, each cone of the individual optical paths P1, P2 has an opening angle comprised between 15° and 40°, preferably 25°. The choice of such opening angles makes it possible to avoid interception errors of the user's finger even in the case of elements 13 being positioned very close to each other.

In this way it is possible to position a large number of acquisition elements 13 close to the delivery point 8, thus allowing the user to keep their attention focused on the positioning of the finger at the product to be selected, thus decreasing the risk of accidental contact with the dispenser and increasing the overall safety of interaction with the dispenser.

Advantageously, a larger angle than 25° can also allow the acquisition elements to be activated by means of several fingers in close proximity or by other parts of the hand, such as e.g. the palm or back.

According to one version, each acquisition element 13 may also comprise an ambient light sensor for the calibration and settings of the threshold values according to the environment of intended use of the dispenser.

The acquisition elements 13 are in signal communication with a control unit (not shown) that controls the delivery of the food ingredients depending on the generation of a trigger signal generated by the acquisition element 13 selected by the user.

In detail, the control unit is programmed to activate the motorized means that move the auger of a single container 4 or of several containers 4 and, at the same time, the water supply depending on the presence or absence of the finger of a user placed in front of a predetermined acquisition element 13. It follows that, should a user wish to receive a certain foodstuff, they will approach their finger of a hand to the corresponding acquisition element 13.

Conveniently, the electronic control unit is configured to activate the delivery of an ingredient as soon as the user's finger is positioned in front of the respective sensor 13, in particular in the opening cone of the optical emission/receiving path P1, P2 of a respective acquisition element 13. In particular, the control unit is configured so that the movement means 4 of the container are activated for a predetermined time as soon as the user's finger is positioned in the opening cone of the optical emission/receiving path P1, P2 of the acquisition element 13 selected by the user.

Preferably, the electronic control unit is configured to have the delivery of the foodstuff continue for a predetermined time even after the user's finger has left the opening cone of the optical emission/receiving path P1, P2. In substance, it is ensured that the quantity of ingredients exiting the containers 4 is delivered according to doses set in advance.

Preferably, the delivery of the foodstuff begins after the user's finger has remained positioned in the cone of the optical emission/receiving path P1, P2 for a time comprised between 0.5 seconds and 4 seconds, preferably about 1 second.

According to further embodiments, the acquisition elements 13 may also be positioned in the upper portion 5 of the frame 2 even according to different orientations and distributed not necessarily along one and the same direction. For example, as observable in Figure 1, above the main acquisition elements 13, auxiliary acquisition elements 14 may be arranged oriented overall along a horizontal direction. In detail, the auxiliary acquisition elements 14 can be used to activate the delivery of foodstuffs of different type, or to set the doses (preferably preset according to two types of quantities, e.g. standard or double) of the foodstuff to be delivered, or again to set special functions of the dispenser, such as the language, etc.

Advantageously, the auxiliary acquisition elements 14 are fewer in number than the acquisition elements 13.

According to some versions, the dispenser 1 can be provided with one or more covers which partly or completely cover the door 2a and the acquisition elements 13. The cover contains the graphic elements intended to signal the types of product that can be delivered and other customized communication messages according to the intended use of the dispenser 1. Conveniently, the cover can be made of an at least partly transparent material so as to be backlit by lighting means arranged in the front panel 3. As shown in Figure 4, the cover can be perforated at the point where each acquisition element 13 is located for the transit of the optical paths P1, P2.

According to one embodiment, the dispenser may comprise acoustic and/or visual signaling means to inform the user that a certain product is ready to be delivered and/or that the product is being delivered.

Preferably, the signaling means may comprise indicator lights arranged around each acquisition element 13 for the purpose of providing light color variations depending on the delivery state of the beverage. By way of example, prior to delivery, the indicator light may emit red light to inform the user when the dispenser is awaiting selection and green light subsequent to activation of the selected acquisition element 13.

Similarly, the signaling means may comprise acoustic indicators (not shown) for the purpose of providing acoustic signals that are also variable depending on the delivery state of the product.

According to an embodiment not shown, the control unit is intended to stop the delivery of a product when the content in the receptacle exceeds a preset dosage.

One possible method for the delivery of a foodstuff according to the present invention is described below.

An initial phase involves a user standing in front of the dispenser 1 and placing a receptacle on the surface 7 below the delivery point 8.

Next, the user raises an arm to bring the finger of a hand (or the same hand) towards one of the acquisition elements 13 in order to activate the delivery of the product of interest to the user.

Subsequently, the electronic control unit receives the trigger signal from the acquisition element 13 indicated by the user in order to start the delivery and activates the motor means for the rotation of the auger of one or more containers 4 so as to start the forward movement of the ingredients in the respective delivery lines.

According to one version, there is a phase of activating a first auger of a first container 4 to make an ingredient move forward to the respective delivery line and a further phase of activating a second auger of a second container 4 to make an additional ingredient move forward to the respective delivery line, such phases being separated from each other by a time interval ranging from 0.1 seconds to 30 seconds.

According to a further version, there is a phase of activating two or more augers substantially simultaneously to make ingredients move forward from two separate delivery lines.

The delivery of the foodstuff continues even when the user moves their finger away from the acquisition element 13 beyond the preset predefined time interval. The delivery ends when the exact amount of ingredients, set according to preset doses, exits one or more containers 4 to be received in the user's receptacle.

However, it may happen that a user does not place the receptacle under the correct delivery point 8. In such a case, the dispenser 1 may have verification means to prevent the accidental exit of a foodstuff from a delivery point under which the user has not positioned the receptacle. For this purpose, the dispenser 1 may comprise a plurality of auxiliary acquisition elements 15 that are completely similar to the acquisition elements 13 to prevent incorrect product delivery.

In detail, the auxiliary acquisition elements 15 are configured to generate a trigger signal when the user's receptacle is positioned in front of a respective element 15.

The auxiliary acquisition elements 15 are preferably positioned below the delivery points 8 at the point where the seat 12 is located and arranged to house the receptacle.

The auxiliary acquisition elements 15 are arranged next to each other along a horizontal direction below the delivery points 8.

The control unit is also configured to set the activation times of the delivery starting from the instant when the finger is intercepted by the acquisition element.

In the combined version with double acquisition element 13 and 15, the control unit first acquires the trigger signal from the acquisition element 13 and checks whether the auxiliary acquisition element 15 has also generated its own trigger signal. If and only if both trigger signals are received by the verification means from the control unit, the latter activates the delivery of the foodstuff. Otherwise, the product is not delivered. In such a case, an audio/visual message may be provided to inform the user that the glass has not been placed below the delivery point 8.

According to a preferred embodiment, the foodstuffs contained in the containers are foodstuffs previously prepared and subsequently homogenized and dehydrated. According to one version, the foodstuffs undergo a freeze-drying process. The delivery consists of the following steps:
activate the auger to make the ingredients move forward to the mixing bowl,
mix the ingredients in the mixing bowl with heated water,
mix the heated water and the ingredients together,
make the foodstuff exit from the delivery point 8.

Preferably, the mixing of the ingredients with heated water is carried out inside the mixing bowl 9.

Preferably, the water is heated to a temperature between 50°C and 100°C, preferably 90°C.

Preferably, the water temperature is selected so that the foodstuff is served at a temperature of about 81°C.

Preferably, the water and food ingredients are mixed inside the mixing bowl by means of a rotating propeller.

As could be appreciated, the dispenser for the delivery of food products according to the present invention makes it possible to meet the requirements and overcome the drawbacks referred to in the introductory part of the present description with reference to the prior art.

Obviously, the embodiments and versions described and illustrated therein are to be considered purely as examples and a technician of the sector, in order to satisfy contingent and specific needs, can make numerous modifications and variations to the dispenser, as long as these modifications and variations do not depart from the scope of the appended claims.

For example, embodiments cannot be ruled out wherein the acquisition elements may also be positioned above the frame 2, e.g. at the top horizontal panel, thus allowing easy selection from above by a user in the case of extremely compact dispensers at reduced height (e.g., less than 500 mm).

## Claims

1. Dispenser (1) for the delivery of foodstuffs, comprising:
a frame (2) provided with an upper portion (5) intended for the interface with a user and an intermediate portion (7) comprising at least one delivery point (8) intended for the delivery of a foodstuff to be introduced in a receptacle of the user, said at least one delivery point (8) being positioned below said upper portion (5) of the frame (2),
at least one container (4) for the storage of food ingredients and provided with a lower opening (4a) for the exit of foodstuffs,
a plurality of delivery lines for the ingredients which converge at a single delivery point (8), and
movement means for moving such food ingredients towards said delivery point (8), said lower opening (4a) being in fluid communication with said delivery point (8),
a plurality of contactless acquisition elements (13) that can be activated by means of the finger of a user and each one configured to make the food ingredients move forward towards the delivery point (8) as a result of the activation of one of said acquisition elements (13) at a time,
whereby the acquisition elements (13) are at least equal in number to the number of containers (4) and whereby the acquisition elements (13) are greater in number than the delivery points (8).

2. Dispenser (1) according to the preceding claim, wherein the acquisition elements (13) are greater in number than the containers (4).

3. Dispenser (1) according to any of the preceding claims, wherein each acquisition element (13) is configured to emit/receive a light radiation along substantially coincident optical emission/receiving paths (P1, P2) and extending perpendicularly and frontally with respect to said dispenser (1), each acquisition element (13) being activatable by a user's finger when placed at a distance ranging from 0 mm to 100 mm from the acquisition element (13).

4. Dispenser (1) according to the preceding claim, wherein each optical emission/receiving path (P1, P2) has an opening cone with an angle ranging from 15° to 40°, preferably 25°.

5. Dispenser (1) according to the preceding claim, comprising a control unit configured so that the movement means of the container (4) are activated for a preset time just after the user's finger is positioned in the opening cone of the optical emission/receiving path (P1, P2) of an acquisition element (13).

6. Dispenser (1) according to the preceding claim, wherein said electronic control unit is configured to continue delivering the foodstuff for a preset time even after the user's finger has left the opening cone of the optical emission/receiving path (P1, P2).

7. Dispenser (1) according to any of the preceding claims, comprising:
a hydraulic circuit for the water delivery connected in a fluid-operated manner to said at least one container (4),
heating means for heating water, and
mixing means to mix said hot water with the food ingredients coming out of each container (4) to deliver a hot foodstuff.

8. Dispenser (1) according to the preceding claim, wherein said plurality of acquisition elements (13) is positioned above said at least one delivery point (8) in close proximity to the latter.

9. Dispenser (1) according to any of the preceding claims, comprising signaling means (14) configured to provide light or acoustic color variations depending on the delivery state of the beverage.

10. Method for the delivery of foodstuffs, comprising the phases of:
having a dispenser (1) according to any of claims 3 to 9,
activating the delivery of a foodstuff as soon as the user's finger is positioned in the opening cone of the optical emission/receiving path (P1, P2) of an acquisition element (13),
continuing the delivery of the foodstuff for a preset time interval even if the user's finger has left the opening cone of the optical emission/receiving path (P1, P2),
having previously dehydrated food ingredients,
mixing the ingredients with heated water.

11. Method according to the preceding claim, wherein the water is heated to a temperature between 50°C and 90°C, so that the foodstuff is served at a temperature of about 81°C.

## Patentansprüche

1. Spender (1) für die Ausgabe von Lebensmitteln, umfassend:
einen Rahmen (2), der mit einem oberen Abschnitt (5), der für die Schnittstelle mit einem Benutzer vorgesehen ist, und einem Zwischenabschnitt (7) versehen ist, der mindestens eine Ausgabestelle (8) umfasst, die für die Ausgabe eines Lebensmittels vorgesehen ist, das in einen Aufnahmebehälter des Benutzers eingebracht werden soll, wobei die mindestens eine Ausgabestelle (8) unter dem oberen Abschnitt (5) des Rahmens (2) positioniert ist,
mindestens einen Behälter (4) zur Aufbewahrung von Lebensmittelzutaten, der mit einer unteren Öffnung (4a) für den Austritt von Lebensmitteln versehen ist,
eine Mehrzahl von Zuleitungen für die Zutaten, die an einer einzigen Ausgabestelle (8) zusammenlaufen, und
Bewegungsmittel zum Bewegen solcher Lebensmittelzutaten zu der Ausgabestelle (8), wobei die untere Öffnung (4a) in Fluidverbindung mit der Ausgabestelle (8) steht,
eine Mehrzahl von kontaktlosen Erfassungselementen (13), die mittels des Fingers eines Benutzers aktiviert werden können und jeweils ausgebildet sind, um die Lebensmittelzutaten als Ergebnis der Aktivierung jeweils eines der Erfassungselemente (13) vorwärts in Richtung der Ausgabestelle (8) zu bewegen, wobei die Erfassungselemente (13) mindestens in gleicher Anzahl wie die Behälter (4) vorgesehen sind und wobei die Erfassungselemente (13) in größerer Anzahl vorgesehen sind als die Ausgabestellen (8).

2. Spender (1) gemäß dem vorstehenden Anspruch, wobei die Erfassungselemente (13) in größerer Anzahl vorgesehen sind als die Behälter (4).

3. Spender (1) gemäß einem der vorstehenden Ansprüche, wobei jedes Erfassungselement (13) dazu ausgebildet ist, eine Lichtstrahlung entlang im Wesentlichen koinzidenter optischer Sende-/Empfangswege (P1, P2) zu senden/empfangen, die sich senkrecht und frontal in Bezug auf den Spender (1) erstrecken, wobei jedes Erfassungselement (13) durch einen Finger eines Benutzers aktiviert werden kann, wenn dieser sich in einem Abstand im Bereich von 0 mm bis 100 mm von dem Erfassungselement (13) befindet.

4. Spender (1) gemäß dem vorhergehenden Anspruch, wobei jeder optische Sende-/Empfangsweg (P1, P2) einen Öffnungskegel mit einem Winkel im Bereich von 15° bis 40°, vorzugsweise 25°, aufweist.

5. Spender (1) gemäß dem vorhergehenden Anspruch, umfassend eine Steuereinheit, die so ausgebildet ist, dass die Bewegungsmittel des Behälters (4) für eine voreingestellte Zeit aktiviert werden, sobald der Finger des Benutzers in dem Öffnungskegel des Sende-/Empfangswegs (P1, P2) eines Erfassungselements (13) positioniert ist.

6. Spender (1) nach dem vorhergehenden Anspruch, wobei die elektronische Steuereinheit ausgebildet ist, um die Abgabe des Lebensmittels für eine voreingestellte Zeit fortzusetzen, selbst nachdem der Finger des Benutzers den Öffnungskegel des Sende-/Empfangswegs (P1, P2) verlassen hat.

7. Spender (1) gemäß einem der vorstehenden Ansprüche, umfassend:
einen Hydraulikkreis für die Wasserausgabe, der auf fluidbetriebene Weise mit dem mindestens einen Behälter (4) verbunden ist,
Heizmittel zum Erhitzen von Wasser und
Mischmittel zum Mischen des heißen Wassers mit den Lebensmittelzutaten, die aus jedem Behälter (4) kommen, um ein heißes Lebensmittel auszugeben.

8. Spender (1) gemäß dem vorhergehenden Anspruch, wobei die Mehrzahl von Erfassungselementen (13) über der mindestens einen Ausgabestelle (8) in nächster Nähe zu dieser angeordnet ist.

9. Spender (1) gemäß einem der vorhergehenden Ansprüche, umfassend Signalmittel (14), die ausgebildet sind, um Licht- oder akustische Farbvariationen in Abhängigkeit vom Ausgabestatus des Getränks bereitzustellen.

10. Verfahren zur Ausgabe von Lebensmitteln, das die folgenden Phasen umfasst:
Bereitstellen eines Spenders (1) gemäß einem der Ansprüche 3 bis 9,
Aktivieren der Ausgabe eines Lebensmittels, sobald der Finger des Benutzers in dem Öffnungskegel des Sende-/Empfangswegs (P1, P2) eines Erfassungselements (13) positioniert ist,
Fortsetzen der Ausgabe des Lebensmittels für ein voreingestelltes Zeitintervall, selbst wenn der Finger des Benutzers den Öffnungskegel des optischen Sende-/Empfangswegs (P1, P2) verlassen hat,
Bereitstellen zuvor dehydrierter Lebensmittelzutaten,
Mischen der Zutaten mit erhitztem Wasser.

11. Verfahren gemäß dem vorhergehenden Anspruch, wobei das Wasser auf eine Temperatur zwischen 50 °C und 90 °C erhitzt wird, so dass das Lebensmittel bei einer Temperatur von etwa 81 °C serviert wird.

## Revendications

1. - Distributeur (1) pour la distribution de produits alimentaires, comprenant :
un bâti (2) comportant une partie supérieure (5) destinée à former l'interface avec un utilisateur et une partie intermédiaire (7) comprenant au moins un point de distribution (8) destiné à la distribution d'un produit alimentaire à introduire dans un réceptacle de l'utilisateur, ledit au moins un point de distribution (8) étant positionné au-dessous de ladite partie supérieure (5) du bâti (2),
au moins un récipient (4) pour le stockage d'ingrédients alimentaires et comportant une ouverture inférieure (4a) pour la sortie de produits alimentaires,
une pluralité de lignes de distribution pour les ingrédients, lesquelles convergent vers un unique point de distribution (8), et
des moyens de mouvement pour déplacer ces ingrédients alimentaires vers ledit point de distribution (8), ladite ouverture inférieure (4a) étant en communication fluidique avec ledit point de distribution (8),
une pluralité d'éléments d'acquisition (13) sans contact qui peuvent être activés par le doigt d'un utilisateur et qui sont chacun configurés pour faire avancer les ingrédients alimentaires vers le point de distribution (8) par suite de l'activation de l'un desdits éléments d'acquisition (13) à la fois,
ce par quoi les éléments d'acquisition (13) sont en nombre au moins égal au nombre de récipients (4), et
ce par quoi les éléments d'acquisition (13) sont en plus grand nombre que les points de distribution (8).

2. - Distributeur (1) selon la revendication précédente, dans lequel les éléments d'acquisition (13) sont en plus grand nombre que les récipients (4).

3. - Distributeur (1) selon l'une quelconque des revendications précédentes, dans lequel chaque élément d'acquisition (13) est configuré pour émettre/recevoir un rayonnement lumineux le long de trajets d'émission/réception optiques (P1, P2) sensiblement coïncidents et s'étendant perpendiculairement et frontalement par rapport audit distributeur (1), chaque élément d'acquisition (13) étant apte à être activé par le doigt d'un utilisateur lorsqu'il est placé à une distance située dans une plage allant de 0 mm à 100 mm de l'élément d'acquisition (13).

4. - Distributeur (1) selon la revendication précédente, dans lequel chaque trajet d'émission/réception optique (P1, P2) a un cône d'ouverture ayant un angle situé dans une plage allant de 15° à 40°, de préférence 25°.

5. - Distributeur (1) selon la revendication précédente, comprenant une unité de commande configurée de telle sorte que les moyens de mouvement du récipient (4) sont activés pendant une durée prédéfinie juste après que le doigt de l'utilisateur est positionné dans le cône d'ouverture du trajet d'émission/réception optique (P1, P2) d'un élément d'acquisition (13).

6. - Distributeur (1) selon la revendication précédente, dans lequel ladite unité de commande électronique est configurée pour continuer à distribuer le produit alimentaire pendant une durée prédéfinie même après que le doigt de l'utilisateur a quitté le cône d'ouverture du trajet d'émission/réception optique (P1, P2).

7. - Distributeur (1) selon l'une quelconque des revendications précédentes, comprenant :
un circuit hydraulique pour la distribution d'eau, relié de manière fluidique audit au moins un récipient (4),
des moyens de chauffe pour chauffer de l'eau, et
des moyens de mélange pour mélanger ladite eau chaude avec les ingrédients alimentaires sortant de chaque récipient (4) afin de distribuer un produit alimentaire chaud.

8. - Distributeur (1) selon la revendication précédente, dans lequel ladite pluralité d'éléments d'acquisition (13) sont positionnés au-dessus dudit au moins un point de distribution (8) à proximité étroite de ce dernier.

9. - Distributeur (1) selon l'une quelconque des revendications précédentes, comprenant des moyens de signalisation (14) configurés pour fournir des variations de couleurs lumineuses ou acoustiques en fonction de l'état de distribution de la boisson.

10. - Procédé de distribution de produits alimentaires, comprenant les phases :
avoir un distributeur (1) selon l'une quelconque des revendications 3 à 9,
activer la distribution d'un produit alimentaire dès que le doigt de l'utilisateur est positionné dans le cône d'ouverture du trajet d'émission/réception optique (P1, P2) d'un élément d'acquisition (13),
poursuivre la distribution du produit alimentaire pendant un intervalle de temps prédéfini, même si le doigt de l'utilisateur a quitté le cône d'ouverture du trajet d'émission/réception optique (P1, P2),
avoir des ingrédients alimentaires préalablement déshydratés,
mélanger les ingrédients avec de l'eau chauffée.

11. - Procédé selon la revendication précédente, dans lequel l'eau est chauffée à une température entre 50°C et 90°C, de telle sorte que le produit alimentaire est servi à une température d'environ 81°C.
